# EUROPÄISCHE PATENTSCHRIFT

(11) **EP 0 368 149 B1**
(45) Veröffentlichungstag und Bekanntmachung des Hinweises auf die Patenterteilung: **28.07.1993**
(21) Anmeldenummer: 89120292.1
(22) Anmeldetag: 02.11.1989
(51) Int. Cl.: B29C 45/17

(54) **Kunststoff-Spritzgiessmaschine**
Plastic injection-moulding machine
Machine à mouler par injection les matières plastiques

(30) Priorität: 05.11.1988 DE 3837640; 05.11.1988 DE 3837641
(43) Veröffentlichungstag der Anmeldung: 16.05.1990
(73) Patentinhaber: Hehl, Karl, 72290 Lossburg (DE)
(72) Erfinder:
(74) Vertreter: Mayer, Friedrich E.

(56) Entgegenhaltungen:
- EP-A- 0 204 124
- EP-A- 0 266 554
- EP-A- 0 283 582
- EP-A- 0 291 008
- EP-A- 0 301 200
- CH-A- 381 420
- DE-U- 1 852 612

## Beschreibung

Die Erfindung bezieht sich auf eine Kunststoff-Spritzgießmaschine entsprechend dem Oberbegriff des Patentanspruches 1.

Bei einer bekannten Kunststoff-Spritzgießmaschine dieser Art (DE-GM 1 852 612) ist die Spritzgießeinheit aus der ersten Arbeitsstellung für eine Zentralformfüllung in die weiteren Arbeitsstellung für eine Linearformfüllung bei asymmetrischem Anguß durch Verschwenkung in der Überführungsbene überführbar. Dadurch kann auch das weniger gebräuchliche Linearformfüll-Verfahren, welches vorzugsweise zur Herstellung von großflächigen Kunststoffteilen über einen seitlichen Anguß Anwendung findet, bedarfsweise in der gleichen Spritzgießmaschine angewendet werden, ohne daß eine Umsetzung oder Umschwenkung der Spritzgießeinheit für einen Anguß in die Trennfuge erforderlich ist.

Bei vergleichbaren Spritzgießmaschinen (DE-GM 1.860.806, CH-PS 381 420) ist es auch bekannt, den Träger der Spritzgießeinheit durch eine Parallelverschiebung in horizontaler oder vertikaler Richtung mittels hydraulischer Antriebszylinder oder mittels eines Spindelantriebs in die unterschiedlichen Arbeitsstellungen zu überführen.

Nicht zuletzt ist es bekannt, zur Wegmessung, insbesondere zur Steuerung der Relativbewegung zwischen Baugruppen an einer Arbeitsmaschine, z.B. an einer Kunststoff-Spritzgießmaschine Linearpotentiometer einzusetzen (US-PS 4,680,570; Prospekt der Novo-Technik KG, Offterdinger GmbH & Co., Horbstraße 12, D-7302 Ostfildern 1).

Der Erfindung liegt die Aufgabe zugrunde, eine Kunststoff-Spritzgießmaschine der eingangs genannten Gattung derart weiterzubilden, daß den vielfältigen und unterschiedlichen spritztechnischen Erfordernissen der Kunden und deren finanziellen Möglichkeiten besser Rechnung getragen werden kann, indem die Spritzgießmaschinen vom Hersteller in unterschiedlichen Varianten, nämlich in einer Variante höherer Preisklasse mit programmierbarer Überführungsbewegung in die Arbeitsstellungen und einer Variante niedrigerer Preisklasse ohne programmierbare Überführungsbewegung auslieferbar ist, welche Variante wiederum mit einem Minimum an technischem Aufwand im Rahmen einer entsprechenden Nachrüstung in die Variante mit programmierbarer Überführungsbewegung überführbar ist.

Diese Aufgabe wird erfindungsgemäß durch die Merkmale des Patentanspruches 1 gelöst. Bei einer solchen Lösung gehört ein horizontal verschiebbarer Träger auch zur Grundausrüstung der Spritzgießmaschine, wenn das Erfordernis einer Verschiebbarkeit beim Kauf noch nicht absehbar ist. Dadurch können auch Kaufinteressenten aktiviert werden, die in absehbarer Zeit nicht die Absicht haben, in ihren Spritzprogrammen die Art der Formfüllung (zentrale Formfüllung - lineare Formfüllung) zu wechseln. Tritt jedoch bei diesen Kunden zu einem späteren Zeitpunkt unerwartet das Bedürfnis zu einem Wechsel der Angußart im Gefolge neuer Spritzprogramme auf, so kann diesem Bedürfnis durch eine manuelle Verschiebung des Trägers der Spritzgießform Rechnung getragen werden. Hat der Kunde späterhin den wunsch zu einer vollen Automatisierung, so kann er mit relativ geringen Kosten und einem Minimum an Montageaufwand seine Spritzgießmaschine in die programmierbare Variante überführen. Schließlich besteht auch die Möglichkeit eine oder mehrere Spritzgießmaschinen, deren Überführungsbewegung programmierbar ist, in die einfache nicht programmierbare Variante zurück zu verwandeln, wenn an einem anderen Fertigungsort programmierbare Varianten erforderlich, aber nicht vorhanden sind. In diesem Falle können Steuereinrichtungen vom ersten Fertigungsstandort in den weiteren Fertigungsstandort übernommen werden. Somit liegen bessere Voraussetzungen für eine Anpassung an wechselnde Produktionserfordernisse vor.

Zweckmäßigerweise ist der Träger der Spritzgießeinheit als ein rechteckiger gußeiserner Rahmen ausgebildet (Anspruch 4) an dessen Längsschenkel Führungsrippen angeformt sind, an welchen die Spritzgießeinheit beim periodischen Auf- und Absetzen auf die Spritzgießform an vertikalen und horizontalen Führungsflächen führbar ist. Ein solcher gußeiserner Rahmen läßt sich mit relativ geringen Kosten auslegen für ein einfaches bedienungsmäßiges Einfügen bzw. Ablösen der Steuereinheit und gewährleistet andererseits eine hervorragende Führung der Spritzgießeinheit bei den Spritzzyklen. Auch bietet dieser Rahmen gute Voraussetzungen für eine Verklemmung mit den Führungssäulen, indem nach Anspruch 5 an den Rahmen Spannmuffen angeformt und diese mittels Spannbolzen mit den Führungssäulen verklemmbar sind. Dadurch ist es möglich, bei der Variante mit nicht programmierbarer Überführungsbewegung in die Arbeitsstellungen nach Lösen einer Spannschraube eine einfache manuelle Überführung vorzunehmen.

In beiden oben genannten Varianten ist eine 'Leerspritzstellung' vorgesehen, in welcher zwecks Übergang zur Verarbeitung eines anderen Kunststoffes der Plastifizierzylinder zuvor nach Programm leergespritzt werden und dadurch der gesamte Kunststoffwechsel automatisiert werden kann. In diesem Zusammenhang ist zu erwähnen, daß mit einer Änderung der Formfüllungsart (zentrale Formfüllung; lineare Formfüllung) vielfach auch ein Wechsel des Kunststoffes verknüpft ist. Unter diesem Gesichtspunkt leistet die weitere Ausgestaltung nach Anspruch 6 einen wesentlichen Beitrag zu einer weiteren Rationalisierung der Fertigung im Fertigungskonzept beider Varianten, indem die eine Variante mit einer ortsfesten, jedoch leicht lösbar am stationären Formträger befestigten Kühlplatte und die andere ohne eine solche Kühlplatte ausgeliefert werden kann. Die letztgenannte Variante ist mit einem Minimum an Montageaufwand und kostengünstig durch Nachrüstung in die Variante mit Kühlplatte überführbar. Die Kühlplatte stellt sicher, daß der beim Leerspritzen des Plastifizierzylinders ausgespritzte Kunststoff beim Auftreffen auf die kalte Oberfläche der Kühlplatte momentan erstarrt und zur Entsorgung abfällt. Eine so preisgünstige Anpassung an die Bedürfnisse des Kunden war bislang nicht möglich. Nach dem Stande der Technik war es nämlich lediglich bekannt, eine vor die Durchtrittsöffung des stationären Formträgers einfahrbare Kühlplatte vorzusehen (DE 36 37 613 A1), oder aber eine Kühlzone in den stationären Formträger als solchen zu integrieren (ältere deutsche Patentanmeldung P 37 22 228.7 In keinem Falle waren zwei ineinander überführbare Varianten vorgesehen, von welchen die eine Variante mit einer stationären, jedoch ablösbaren Kühlplatte versehen ist.

Nachstehend wird die Erfindung anhand der Zeichnung an einem Ausführungsbeispiel erläutert.

Es zeigen:
- Fig. 1,2: Die Kunststoff-Spritzgießmaschine bei zentraler Spritzachse in Seitenansicht und Draufsicht,
- Fig. 3,4: Ausschnitte in einer Darstellung gemäß Fig. 2 bei einer Arbeitsstellung für Linearanguß sowie in Leerspritzstellung,
- Fig. 5: einen Schnitt nach Linie V-V von Fig. 1,
- Fig. 6,: Ausschnitt aus Fig. 2 bei abgenommener Spritzgießeinheit,
- Fig. 7: einen Schnitt nach Linie VII-VII von Fig. 6,
- Fig. 8: einen Schnitt nach Linie VIII-VIII von Fig. 1,
- Fig. 9: den Ausschnitt gemäß Fig. 6 bei abgenommener Steuereinrichtung,
- Fig. 10,10a: die programmgesteuerte bzw. die manuell betätigte Steuereinrichtung als solche in Draufsicht und
- Fig. 11: den stationären Formträger von hinten,
- Fig. 12,13: den Ausschnitt gemäß Fig. 6 mit eingefügter Meßeinrichtung.

Der grundsätzliche Aufbau der Spritzgießeinheit der Kunststoff-Spritzgießmaschine ist in der älteren Patentanmeldung P 37 35 419.1-16 des gleichen Anmelders beschrieben und zeichnerisch dargestellt. Die folgende Beschreibung beschränkt sich daher hinsichtlich des Grundaufbaues der Maschine auf die mit der Erfindung in Beziehung stehenden Merkmale.

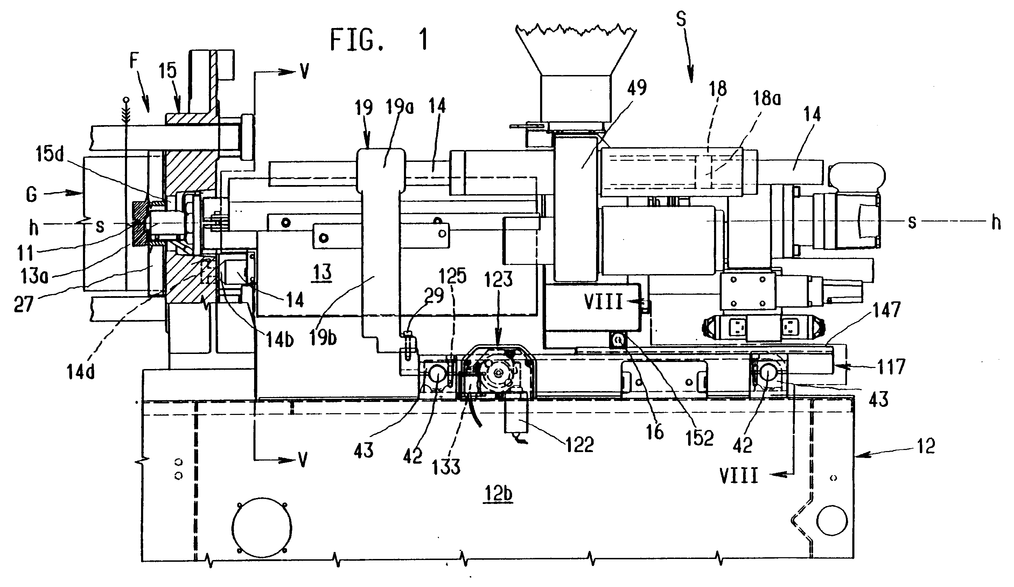

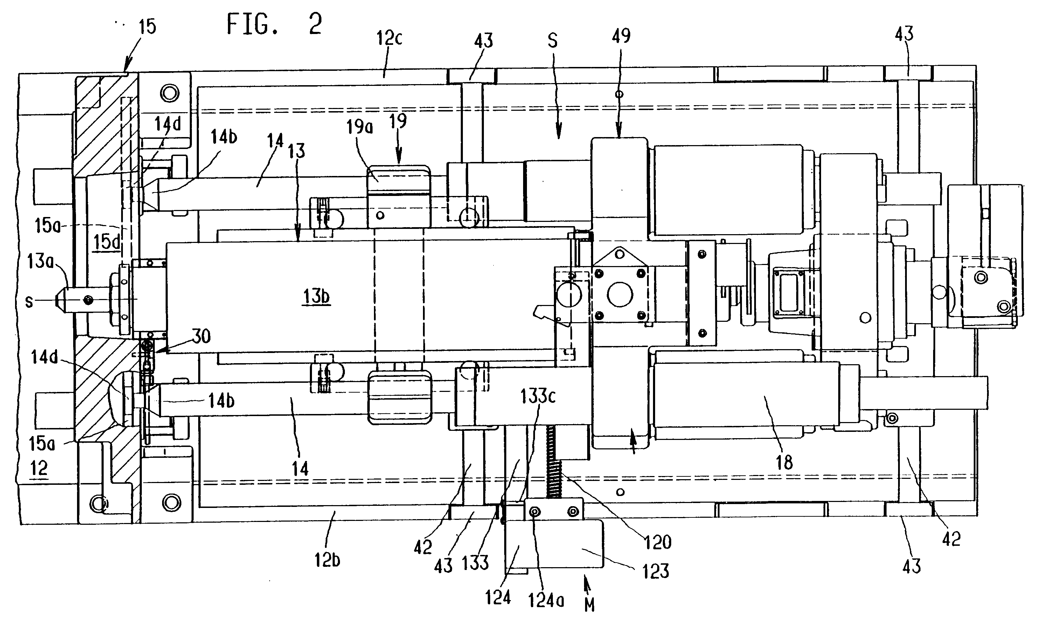

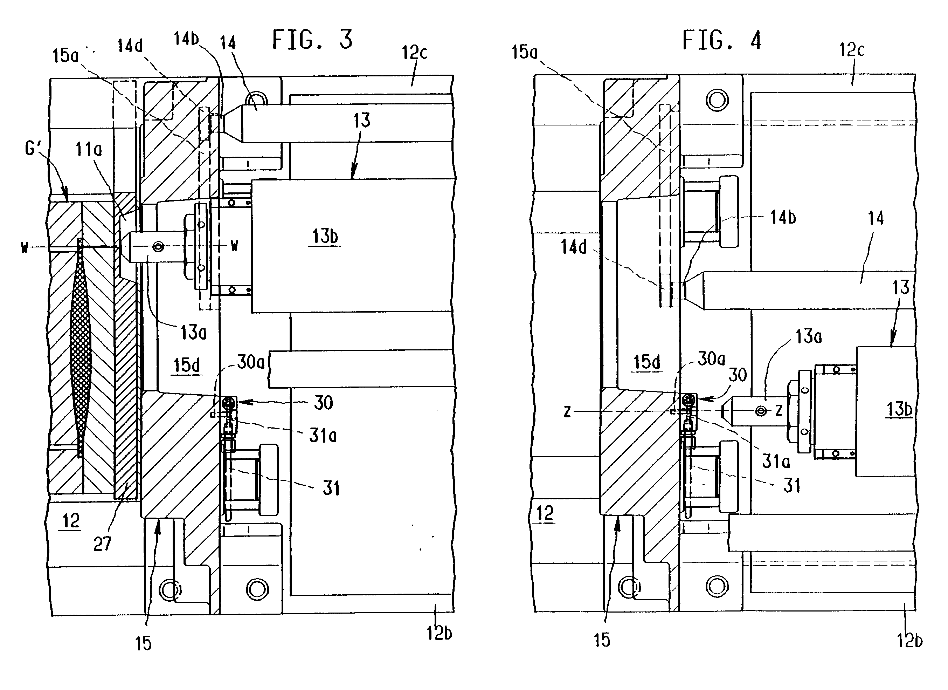

Die Formschließeinheit F und die Spritzgießeinheit S sind auf einem quaderförmigen Maschinenfuß 12 aus Stahlblech je für eine horizontale Arbeitsrichtung angeordnet. Die stationäre Hälfte der jeweils in der Formschließeinheit F eingespannten Spritzgießform G (Fig. 1) bzw. G' (Fig. 3) ist mittels Anlageplatte 27 (Fig. 3) auf den stationären Formträger 15 aufspannbar. Der Formträger 15 weist eine zur zentralen Spritzachse s-s asymmetrische Durchtrittsöffnung 15d für die Düse 13a des Plastifiziereinheit 13 der Spritzgießeinheit S auf. Die Spritzgießeinheit S ist auf Holmen verschiebbar gelagert, die als Kolbenstangen von hydraulischen Antriebszylindern 18 mit ihren vorderen Anschlußenden 14d am stationären Formträger 15 axial festgelegt sind. Rückseitig ist die Spritzgießeinheit S über Stützrollen 16 auf einem rechteckigen, gußeisernen Rahmen 117 abgestützt. Die Spritzgießeinheit S ist mit Hilfe der hydraulischen Antriebszylinder 18 an die jeweilige Spritzgießform G, G' heranfahrbar. Dabei ist sie über die Zylinderdeckel dieser Antriebszylinder 18 auf den Kolbenstangen 14 geführt. Die Kolben 18a (Fig. 1) der Antriebszylinder 18 sitzen auf den Kolbenstangen 14 fest auf, sind also axial feststehend. Darüber hinaus sind die Kolbenstangen mittels eines U-förmigen Stützteiles 19 auf dem Rahmen 117 abgestützt, wie insbesondere aus den Fig. 1, 2 ersichtlich. die freien Enden der U-Schenkel 19b des Stützteiles 19 sind als Muffen 19a ausgebildet,die als Klemmlager die Kolbenstangen 14 umgreifen. Das Stützteil 19 ist ein Gußstück, das mit angeformten Auflagesockeln 117a des Rahmens 117 mittels Befestigungssschrauben 29 unmittelbar verbunden ist. In einer ersten Arbeitsstellung liegt die Spritzachse s-s koaxial zu einem zentralen

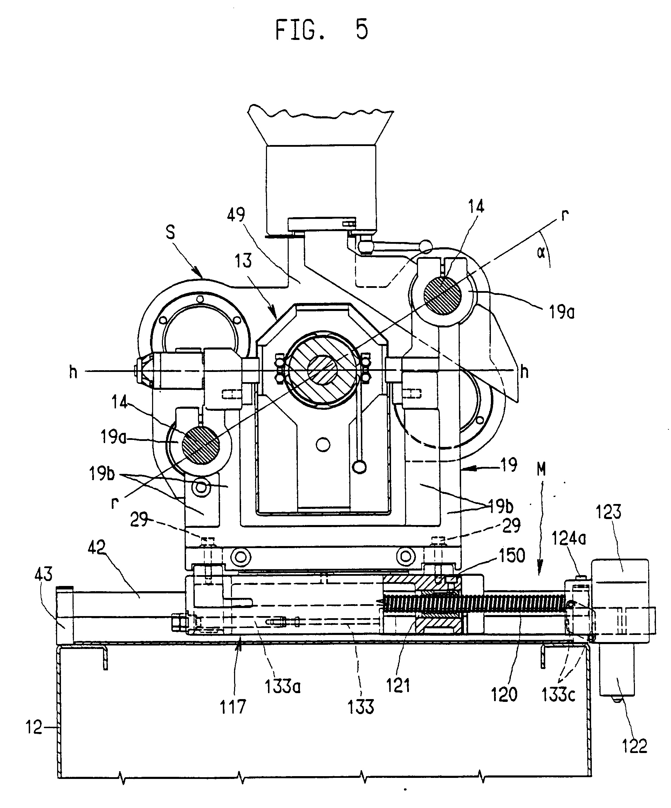

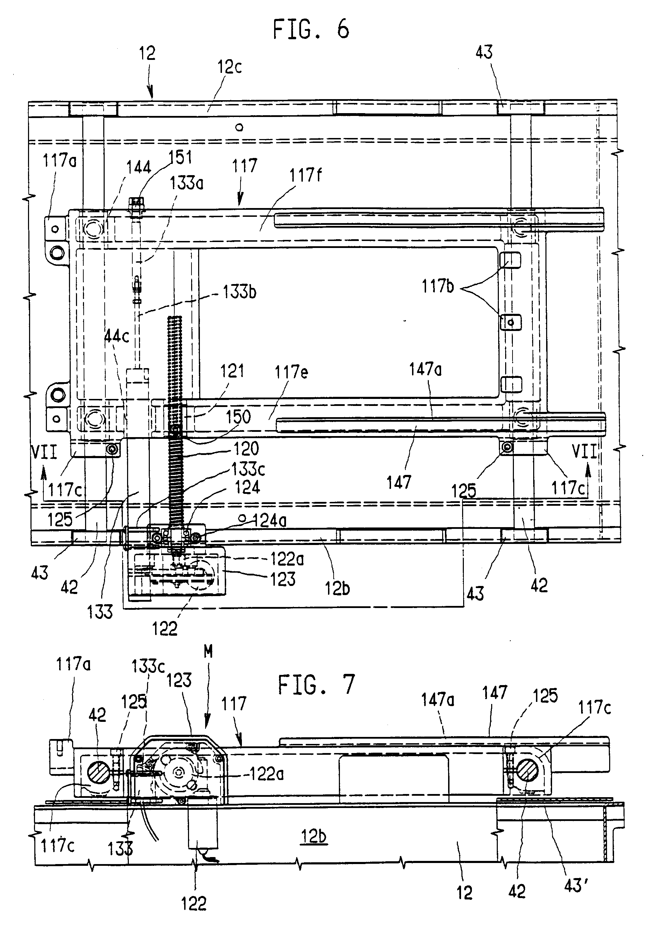

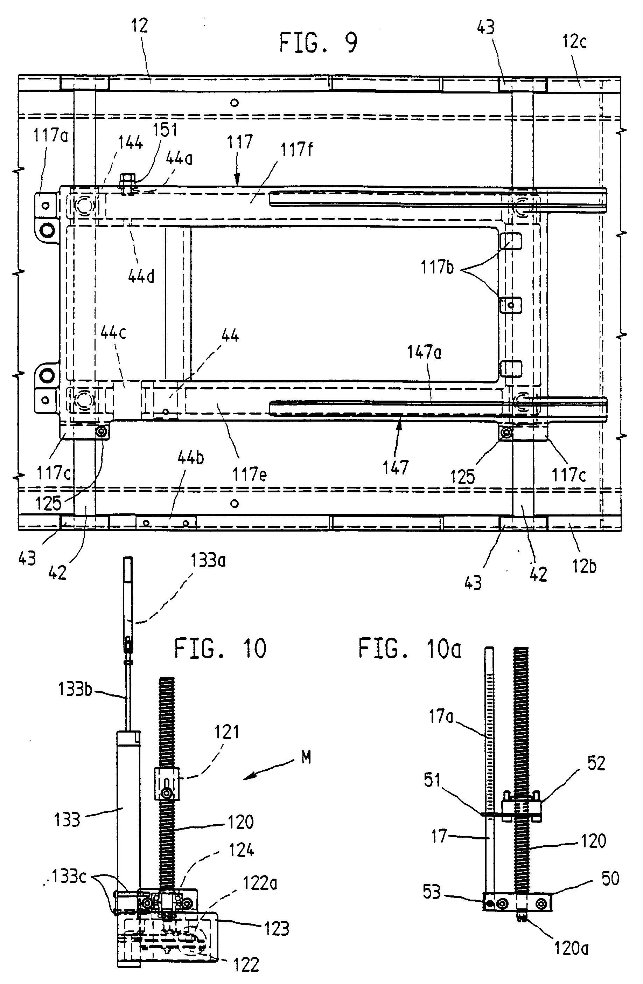

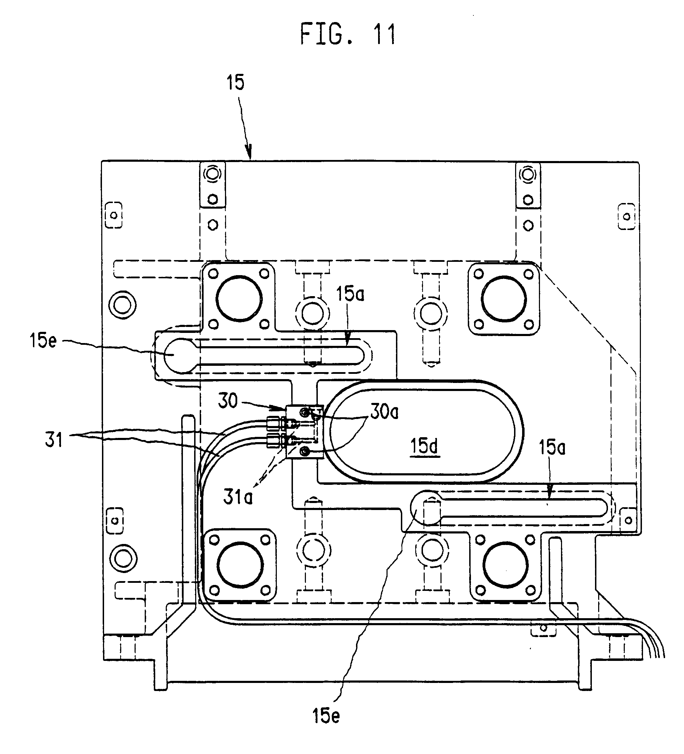

Angußkanal 11 der Spritzgießform G. Die Spritzgießeinheit S ist über die Durchtrittsöffnung 15d an den Angußkanal 11 der Spritzgießform G heranfahrbar.
Die Spritzgießeinheit is tin wenigstens eine weitere Arbeitsstellung überführbar, in welcher sie bei nicht zentraler Spritzachse w-w auf eine für einen seitlichen, asymmetrischen Anguß eingerichtete Spritzgießform G' (Fig. 3) mit Angußkanal 11a aufsetzbar ist. Die Überführung der Spritzgießform erfolgt in einer zur zentralen Spritzachse s-s liegenden Überführungsebene h-h. Die Kolbenstangen 14 sind in horizontalen Führungen 15a des Formträgers 15 verschiebbar gelagert. Bei Überführung der Spritzgießeinheit S wandern die Kolbenstangen 14 in den nutenartigen Führungen 15a, von welchen eine oberhalb der Durchtrittsöffnung 15d und die andere unterhalb dieser Durchtrittsöffnung 15d angeordnet ist. Zur axialen Festlegung sind die Kolbenstangen 14 an ihren Anschlußenden 14d in den Führungen 15a im Bereich diametraler Einschnürungen 14b hintergriffen. Die wahlweisen weiteren Arbeitsstellungen mit nicht zentralen Spritzachsen w-w liegen auf der einen Seite der zentralen Spritzachse s-s in der horizontalen Überführungsebene h-h (Fig. 5). Aus der ersten Arbeitsstellung mit zentraler Spritzachse s-s ist die Spritzgießeinheit in weitere Arbeitsstellungen (andersseitige Arbeitsstellungen) bewegbar, die auf der anderen Seite der Spritzachse s-s liegen. In der einen andersseitigen Arbeitsstellung ist die Spritzgießeinheit S axial vom Formträger 15 abnehmbar. Zu diesem Zweck sind die Führungen 15a in dem mit der Abnahmestellung korrespondierenden Abschnitt zur axialen Freisetzung der Anschlußenden 14d mit Ausnehmungen 15e (Fig. 11) versehen. In einer weiteren andersseitigen Arbeitsstellung schneidet deren Spritzachse z-z eine am stationären Formträger angeordnete Kühlplatte 30, wie insbesondere aus Fig. 4 ersichtlich. In dieser weiteren Arbeitsstellung (Leerspritzstellung) kann der Plastifizierzylinder leer gespritzt werden. Diese 'Leerspritzstellung' ist erforderlich, wenn der Spritzbetrieb mit einem anderen Kunststoff fortgesetzt werden soll. Wird beim Leerspritzen des Plastifizierzylinders Kunststoff aus der Düse 13a ausgespritzt, so trifft dieser auf eine Kühlplatte 30 auf. Die Kühlplatte 30 ist mittels Gewindebolzen 30a leicht lösbar mit dem Formträger 15 verbunden. Die am linken Rand der Durchtrittsöffnung 15d angeordnete Kühlplatte 30 ist mit Hilfe eines von einem Kühlmedium durchflossenen Kühlkanals 31a kühlbar. Das Kühlmedium zirkuliert über die Leitungen 31 (Fig. 11). Beim Auftreffen des heißen Kunststoffmaterials auf die Kühlplatte 30 erstarrt dieses augenblicklich und fällt zur Entsorgung nach unten ab. Der die Spritzgießeinheit tragende gußeiserne Rahmen 117 ist auf stationären Führungssäulen 42 horizontal und senkrecht zur Spritzachse s-s; w-w verfahrbar. Dabei ist der Rahmen 117 mit Hilfe einer aus dem Spindeltrieb und Linearpotentiometer bestehenden Steuereinrichtung M nach Programm angetrieben. Die Führungssäulen 42 sind auf den Längswänden 12b, 12c über Lagerstücke 43 abgestützt. Der Rahmen 117 ist zwecks Festlegung auf die unterschiedlichen Arbeitsstellungen der Spritzgießeinheit S mit den stationären Führungssäulen 42 verklemmbar. Zu diesem Zweck ist der Rahmen 117 vorzugsweise mit zwei angeformten, radial gespaltenen Spannmuffen 117c versehen (vergl. insbesondere Fig. 6). Zum Verspannen bzw. zum Lösen der Verspannung wird ein die radiale Spaltfuge 117d durchsetzender Spannbolzen 125 betätigt. Der Spindeltrieb ist als Kugelrollspindeltrieb ausgebildet. Die Kugelrollmutter 121, die mit der Kugelrollspindel 120 zusammenarbeitet, ist in einer eingeformten Paßbohrung 44 des Längsschenkels 117e des Rahmens 117 aufgenommen und dort mittels einer leicht lösbaren Stellschraube 150 gesichert. Unterhalb der Kugelrollspindel 120 ist auf dem horizontal eingebogenen Rand der Längsseite 12b des Maschinenfußes 12 ein Lagersockel 44b fest angeordnet, mit welchem das Spindeldrehlager 124 leicht lösbar verbunden ist. Die Paßbohrung 44 und der Lagersockel 44b sind somit positionsbestimmend für die Kugelrollspindel 120. Dem Kugelrollspindeltrieb ist ein Linearpotentiometer 133 zugeordnet. Der den Schliefkontakt des Linearpotentiometers tragende Schlitten ist innerhalb des Gehäuses dieses Linearpotentiometers längs verschiebbar aufgenommen. Eine mit dem Schlitten verbundene Stange 133b ragt aus dem Gehäuse des Linearpotentiometers 133 heraus. Die Steuereinheit M (Fig. 10) wird bei Montage im Gefolge einer quer zur Spritzachse s-s; w-w gerichteten Montagebewegung in eine Montage-Endposition überführt, in welcher das Spindeldrehlager 124 mit dem positionierenden Lagersockel 44b verbindbar ist. Bei der genannten Montagebewegung gleiter die Kugelrollmutter 121 in die Paßbohrung 44 des Längsschenkels 117e hinein, zugleich durchsetzt das Linearpotentiometer 133 den Längsschenkel 117e über eine Ausnehmung 44c (Fig. 9). In den Arbeitsstellungen ist die Spritzgießeinheit S durch Selbsthemmung des Spindeltriebes festgelegt. Wie insbesondere aus den Fign. 6, 9 ersichtlich, ist der innerhalb des Gahäuses des Linearpotentiometers 133 angeordnete, den Schleifkontakt tragende Schlitten über eine Stange 133b verschraubt. Bei der vorgenannten Montagebewegung wird daher sowohl die Kugelrollmutter 121 als auch das Positionierungselement 133a in die zugehörige Paßbohrung 44 bzw. 44d des zugehörigen Längsschenkels 117e bzw. 117f des Rahmens 117 eingefügt. Nach Montage endet das mit einem Außengewinde versehene Positionierungselement in einer Gewindebohrung 44a des Längsschenkels 117f. Zur lösbaren Verbindung des Schlittens des Linearpotentiometers mit dem Rahmen 117 ist eine Hohlschraube 151 (Fig. 6) vorgesehen, welche einerseits mit dem Innengewinde der Gewindebohrung 44a im Eingriff steht und andererseits mit dem Positionierungselement 133a verschraubt ist. Dank der Schraubverbindung zwischen der Stange 133b des Schlittens und dem Positionierungselement 133a ist eine Justierung der Ausgangsposition des Schlittens, d.h. eine exakte räumliche Festlegung desselben zum Rahmen 117 möglich.
Für die Schnellmontage der Steuereinheit sind beim zeichnerischen Ausführungsbeispiel lediglich die Schrauben 124a am Spindeldrehlager 124, die Stellschraube 150 an der Kugelrollmutter 121 und die Hohlschraube 151 an der Gewindebohrung 44a zu betätigen. Diese Montage kann daher vom Kunden auch dann durchgeführt werden, wenn ihm nur wenig geschultes Personal zur Verfügung steht.

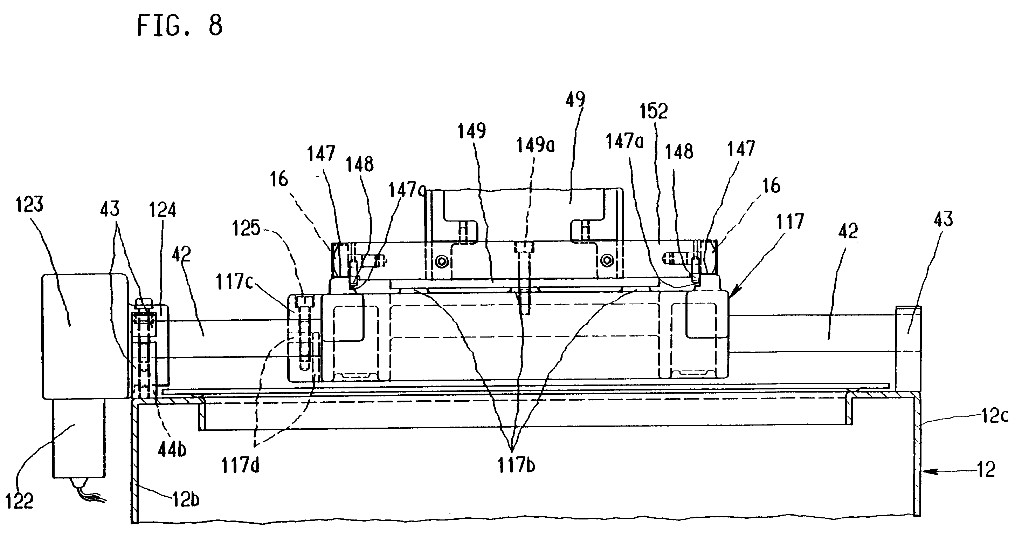

Wie aus den Fig. 6, 7, 10 ersichtlich, ist das Gehäuse des Linearpotentiometers 133 mittels Gewindebolzen 133c mit dem Spindeldrehlager 124 fest verbunden. An der Außenwand des Spindeldrehlagers 124 ist der motorische Antrieb, der ein Untersetzungsgetriebe 122a umfaßt, als bauliche Einheit befestigt. Wie insbesondere aus Fig. 6 ersichtlich, liegt diese von einem Gehäuse 123 umschlossene Einheit außerhalb der Grundrißfläche des Maschinenfußes 12. Die Drehzahl des senkrecht zur Achse der Kugelrollspindel 120 liegenden Motors 122 ist mittels eines Schneckentriebes untersetzbar. Wie aus Fig. 6, 7 erkennbar, ist der geßeiserne Rahmen 117 mit angeformten Führungsrippen versehen. Diese Führungsrippen weisen horizontale Auflageflächen 147 für Stützrollen 16 (Fig. 1, 8) der Spritzgießeinheit S auf. Zugleich sind sie mit vertikalen Führungsflächen 147a für Führungsstifte 148 zur seitlichen Führung der Spritzgießeinheit S versehen. Das Linearpotentiometer 133 liefert dem Rechner der Kunststoff-Spritzgießmaschine die Signale, welche zur Realisierung der jeweils gewünschten Arbeitsstellung der Spritzgießeinheit erforderlich sind. Für alle Arbeitsstellungen einschließlich der 'Leerspritzstellung' und der Abnahmestellung genügt die horizontale Verschiebung des Trägers der Spritzgießeinheit S im Zusammenspiel mit deren horizontalem Heranfahren an die Spritzgießform G bzw. G' je nach Programm des Rechners. Zur Überführung der Spritzgießeinheit in die unterschiedlichen Arbeitsstellungen werden die Anschlußenden 14d der Kolbenstangen 14 in den nutenartigen Führungen 15a freigegeben, sobald der Düsenanlage-Gegendruck durch das Wegfahren der Spritzgießeinheit von der Spritzgießform G bzw. G' aufgehoben ist. Auch der Durchfluß des Kühlmediums durch den Kühlkanal 31a der Kühlplatte 30 ist in Abhängigkeit vom Überführen der Spritzgießeinheit S in die 'Leerspritzstellung' nach Programm des Rechners steuerbar. Die Kolbenstangen 14 der Spritzgießeinheit S und somit auch die Antriebszylinder 18 liegen in einer durch die zentral Spritzachse s-s gehenden Ebene r-r (Fig.5), die einen Winkel α zur Horizontalen einschließt.

Wie insbesondere aus Fig. 1 in Verbindung mit Fig. 8 erkennbar, sind die Stützrollen 16 in einer Leiste 152 drehbar gelagert, welche unten am Tragkörper 49 der Spritzgießeinheit befestigt ist. Das gleiche gilt für die Führungsstifte 148. Zur Transportsicherung beim Versand der Maschinen ist die auf den Führungsrippen axial rollbare Spritzgießeinheit S mittels einer Schraube 149a mit dem Rahmen 117 fest verbindbar.

Dabei sind die Führungssäulen 42 mittels einer arretierenden Leiste 149 festgestellt, wie insbesondere aus Fig. 8 erkennbar. Bei der Festlegung wird die arretierende Leiste 149 derart auf Aufgüsse 117b des Rahmens aufgeschoben, daß nach Anziehen des Schraubenbolzens 149a die Stützrollen 16 und die Führungsstifte 148 vom vollen Gewicht der Spritzgießeinheit S entlastet sind.

Wie aus den Fign. 1,6 ersichtlich, ruht das Stützteil 19 auf Stützflächen von Sockeln 117a, die an den Rahmen angeformt sind. Im konkreten Ausführungsbeispiel ist dieser Rahmen mittels Kugelbuchsen 144 auf den Führungssäulen 42 verschiebbar, so daß auch schwere Spritzgießeinheiten S mühelos manuell auf die unterschiedlichen Arbeitsstellungen verschiebbar sind. Die Plastifiziereinheit 13 ist allseitig mit Schutzabdeckungen 13b versehen.

Wie insbesondere aus Fig. 9 ersichtlich, ist der Rahmen 117 auf horizontalen führungssäulen 42 verschiebbar, die auf parallelen Längswänden 12b, 12c des Maschinenfußes 12 abgestützt sind. Wenigstens eine der Führungssäulen 42 ist mit einer Skalierung 17 (Fig. 6, 9) versehen.

In manchen Fällen kann es zweckmäßig sein, die Kühlplatte aus Halbleiterkühlelementen (Peltierelementen) aufzubauen. Dies ist vor allem dann angezeigt, wenn Kunststoffe mit ungewöhnlichen physikalischen Eigenschaften zur Verarbeitung kommen, bei welchen eine Verfestigung bzw. Erstarrung durch Erhöhung der Temperatur herbeigeführt wird.

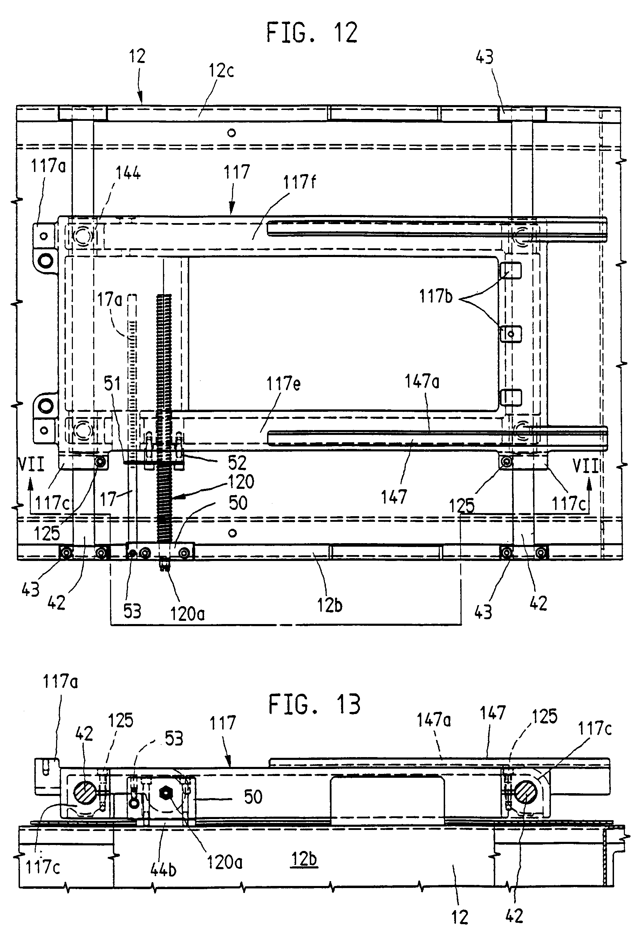

In diesem Falle wird beim Übergang von einem 'üblichen' Kunststoff auf den 'ungewöhnlichen' Kunststoff die aus Halbleiterkühlelementen aufgebaute Kühlplatte gewendet, so daß beim Leerspritzen deren 'warme' Seite vom ausgespritzten Kunststoff beaufschlagt wird. Das gleiche Ergebnis ist programmgemäß auch durch eine Umpolung der Peltier-Kühlplatte erreichbar. Wie aus einem Vergleich der figuren 12,13 mit den Figuren 6,7,9 und 10 erkennbar wird, kann anstelle der Steuereinrichtung M in die Spritzgießmaschine eine mechanische Meßeinrichtung eingefügt werden, die eine Meßstange 17 mit Meßskala 17a sowie eine Muffe 17c umfaßt, welche die Meßstange 17 umschließt. In diesem Falle dient die Stirnkante der Muffe 17c als Ablesekante bei der manuellen Einstellung der Spritzgießeinheit S auf die jeweilige Arbeitsstellung. Die Meßstange 17 ist* am Lagersockel 44b befestigbar, der im Falle des Einsatzes der Steuereinheit M das Spindeldrehlager 124 der Kugelrollspindel 120 aufnimmt. Die Muffe 17c ist in der Paßbohrung 44 axial festgelegt, die in den Längsschenkel 117e des Rahmens 117 eingebracht ist. Diese Paßbohrung nimmt im Falle des Einsatzes der Steuereinheit M die Kugelrollmutter 121 auf.
* mittels Befestigungsstück 17b ( Fig.12,13)

Anstelle der in Figur 10 beschriebenen Steuereinrichtung kann auch eine manuell betätigbare Steuereinrichtung entsprechend Figur 10a am Lagersockel 44b der Spritzgießmaschine befestigt werden. Dabei verfügt die Kugelrollspindel 120 über einen Zapfen 120a für die manuelle Bedienung der Kugelrollspindel. Über einen Lagerbock 50 steht die Kugelrollspindel mit einer mit Meßskala 17a versehenen Meßstange in Verbindung. Die Mutter 52 der Kugelrollspindel ist dabei so mit dem Rahmen 117 verbunden, daß ein an der Mutter befestigtes Markierungsblech über die Meßskala 17a der Meßstange 17 gleitet. Die Anordnung der Mutter 52 am Rahmen 117 gewährleistet dabei einen ungehinderten Blick auf das Markierungsblech 51, so daß jederzeit eine wiederholbare Einstellung der Spritzgießeinheit S zu ermöglichen ist. Mit dem Bezugszeichen 53 ist eine Klemmschraube bezeichnet, die für eine lösbare Verbindung von Meßstange 17 und Lagerbock 50 sorgt.

Die nutenartigen Führungen 15a des Formträgers 15 sind keine üblichen Gleitführungen. Durch das Auffahren des Plastifizierzylinders werden lediglich beim Spritzvorgang die Kolbenstangen 14 am Formträger in diesen Führungen festgelegt. Sobald jedoch der Spritzvorgang beendet ist, sind auch die Anschlußenden 14d nur noch mit Spiel in den nutenartigen Führungen 15a geführt. Somit ist einerseits während des Spritzvorgangs die erforderliche Anlagegenauigkeit unter Vermeidung eines diese Anlagegenauigkeit verringernden Kippmomentes erreicht, während andererseits nach Beendigung des Spritzvorganges die für eine Verschiebung oder einen Wechsel erforderliche Beweglichkeit erreicht wird. Die diagonale, symmetrisch zur Spritzachse erfolgte Anordnung trägt dabei ebenfalls zu einer günstigen Kräfteverteilung bei.

## Patentansprüche

1. Kunststoff-Spritzgießmaschine, in welcher wahlweise eine Spritzgießform (erste Spritzgießform G) mit zentraler Angußöffnung (11) oder andere Spritzgießformen (G') mit nicht zentraler Angußöffnung (11a) für einen asymmetrischen Anguß einsetzbar sind, mit einer horizontalen, auf einem Maschinenfuß (12) angeordneten Formschließeinheit (F) sowie mit einer Spritzgießeinheit (S), die auf einem auf horizontalen Führungen verschiebbar gelagerten gußeisernen Träger angeordnet ist, und aus einer ersten Arbeitsstellung, in der sie bei zentraler Spritzachse (s-s) an die zentrale Angußöffnung (11) der ersten Spritzgießform (G) heranfahrbar ist, mittels eines am Maschinenfuß (12) abgestützten und am Träger der Spritzgießeinheit (S) angreifenden Spindeltriebes in einer durch die zentrale Spritzachse (s-s) gehenden Überführungsebene (h-h) wahlweise in weitere durch nicht zentrale Spritzachsen (w-w) bestimmte Arbeitsstellungen festlegbar und in diesen über eine wenigstens in Richtung der Überführungsebene (h-h) erweiterte Durchtrittsöffnung (15d) an die nicht zentrale Angußöffnung (11a) der anderen Spritzgießform (G') heranfahrbar ist,
dadurch gekennzeichnet, daß eine aus einer Wegmeßeinrichtung (Linearpotentiometer 133) und dem Spindeltrieb gebildete, nach Programm betätigbare Steuereinrichtung (M) des Trägers (Rahmen 117) der Spritzgießeinheit in positionsbestimmenden Einformungen (Paßbohrung 44;44d, Gewindebohrung 44a, Lagersockel 44b) des Trägers lösbar in der Kunststoff-Spritzgießmaschine aufgenommen ist.

2. Spritzgießmaschine nach Patentanspruch 1, dadurch gekennzeichnet, daß als Wegmeßeinrichtung ein mit dem Spindeltrieb eine bauliche Einheit bildendes Linearpotentiometer (133) vorgesehen ist, dessen Gehäuse am Spindeldrehlager (124) befestigt und dessen Schleifkontaktträger mit dem Träger (Rahmen 117) der Spritzgießeinheit (S) lösbar verbunden ist.

3. Spritzgießmaschine nach Patentanspruch 1 oder 2, dadurch gekennzeichnet, daß der an der Außenwand des Spindeldrehlagers (124) befestigte, senkrecht zur Achse der Gewindespindel (120) liegende Motor (122) mit einem als Schneckengetriebe ausgebildeten Untersetzungsgetriebe (122a) eine außerhalb der Grundrißfläche des Maschinenfußes (12) liegende Einheit bildet.

4. Spritzgießmaschine nach Patentanspruch 3, dadurch gekennzeichnet, daß de auf horizontalen, auf parallelen Längswänden (12b,12c) des Maschinenfußes abgestützten Führungssäulen (42) verschiebbare Träger durch einen rechteckigen Rahmen (117) gebildet ist, in dessen dem Spindeldrehlager (124) zugewandten Längsschenkel (117e) die Paßbohrung für die Kugelrollmutter (121) des als Kugelrollspindeltrieb ausgebildeten Spindeltriebes eingeformt ist, daß ein für das Spindeldrehlager (124) positionsbestimmender Lagersockel (44b) auf einem horizontal eingebogenen Blechrand der Längswand (12b) des Maschinenfußes (12) befestigt ist und daß sowohl die Kugelrollmutter (121) als auch ein Positionierungselement (133a) des Linearpotentiometers (133) infolge einer quer zur Spritzachse (s-s,w-w) gerichteten, axialen Montagebewegung in eine Montageendposition in die Paßbohrung (44,44d) eines Längsschenkels (117e;117f) des Rahmens (117) einfügbar sind, wobei eine Ausnehmung (44c) des die Kugelrollmutter (121) aufnehmenden Längsschenkels (117e) von einem Abschnitt des Linearpotentiometergehäuses durchfahrbar und das Spindeldrehlager (124) mit dem Lagersockel verbindbar ist.

5. Spritzgießmaschine nach Patentanspruch 4, dadurch gekennzeichnet, daß der Rahmen (117) mit angeformten Führungsrippen mit horizontelan Auflageflächen (147) für Stützrollen (16 in Fig. 1,8) der Spritzgießeinheit (S) und mit vertikalen Führungsflächen (147a) für Führungsstifte (148) versehen ist und mittels angeformter, radial gespaltener Spannmuffen (117c) und mittels die Spaltfugen (117d in Fig. 8) durchsetzenden Spannbolzen (125) mit den Führungssäulen (42) verklemmbar ist.

6. Spritzgießmaschine nach einem der vorhergehenden Patentansprüche, dadurch gekennzeichnet, daß eine der Arbeitsstellungen (Leerspritzstellung) der Spritzgießeinheit (S) durch eine Spritzachse (z-z) bestimmt ist, welche eine mit dem stationären Formträger (15) lösbar verbundene Kühlplatte (30 in Fig. 4,11) schneidet, wobei die wahlweisen Spritzachsen (w-w) für einen asymmetrischen Anguß auf der einen Seite der zentralen Spritzachse (s-s) und die Spritzachse (z-z) der Leerspritzstellung auf der anderen Seite der zentralen Spritzachse (s-s) je in der horizontalen Überführungsebene (h-h) liegen.

7. Spritzgießmaschine nach einem der vorhergehenden Patentansprüche, dadurch gekennzeichnet, daß die Spritzgießeinheit (S) mittels hydrualischer Antriebszylinder (18) an die jeweilige Spritzgießform (G;G') heranfahrbar ist, deren Kolbenstangen (14) sich bis zum stationären Formträger (15) erstrecken und in nutenartigen Führungen (15a) dieses Formträgers (15) axial festlegbar sowie mittels eines gußeisernen Stützteils (19) auf em Rahmen (117) abstützbar und mit diesem horizontal verfahrbar sind.

8. Spritzgießmaschine nach einem der Patentansprüche 5-7, dadurch gekennzeichnet, daß zur Transportsicherung die Spritzgießeinheit auf dem Rahmen (117) unter Entlastung der Stützrollen (16) und der Führungsstifte (148) mittels einer arretierenden Leiste (149) und eines Schraubenbolzens (149a) feststellbar ist.

9. Spritzgießmaschine nach einem der vorhergehenden Patentansprüche, dadurch gekennzeichnet, daß wenigstens eine der Führungssäulen (42) mit einer Meßskala (17a) versehen und die dem Bedienungsplatz der Spritzgießmaschine zugewandte Kante des Rahmens (117) zur manuellen Einstellung der gewünschten Arbeitsstellung der Spritzgießeinheit (S) als Ableskante über die Meßskala (17a) gleitbar ist.

10. Spritzgießmaschine nach einem der vorhergehenden Patentansprüche, dadurch gekennzeichnet, daß anstelle der Steuereinheit (M) wahlweise eine Meßeinrichtung zur reproduzierbaren Einstellung der gewünschten Arbeitsstellung der Spritzgießeinheit (S) vorgesehen ist, die eine Meßstange (17) und eine diese Meßstange (17) umschließende Muffe (17c) umfaßt, deren Stirnkante als Meßkante über die Meßskala (17a) gleitbar ist, wobei die Meßstange (17) am Lagersockel (44b) und die Muffe in der Paßbohrung (44) befestigbar sind.

## Claims

1. Plastics material injection moulding machine, in which an injection mould (first injection mould G), provided with a central sprue gate (11), or other injection moulds (G'), provided with an off-centre sprue gate (11a), are selectively usable for a non-symmetrical sprue, including a horizontal mould closing device (F), which is disposed on a machine bed (12), and an injecting unit (S), which is disposed on a cast iron carrier displaceably mounted on horizontal guide members, and said injecting unit is selectively adjustable from a first operating position, in which such unit is movable to the central sprue gate (11) of the first injection mould (G) with a central injection axis (s-s), into additional operating positions, determined by off-centre injection axes (w-w), by means of a spindle drive, which is supported on the machine bed (12) and engages with the carrier of the injecting unit (S), in a transfer plane (h-h) extending through the central injection axis (s-s), and said injecting unit is movable, in additional operating positions, to the off-centre sprue gate (11a) of the other injection mould (G') via an opening (15d) which is widened in at least the direction of the transfer plane (h-h), characterised in that a program-operable control device (M) of the carrier (frame 117) of the injecting unit is formed from a displacement measuring device (linear potentiometer 133) and the spindle drive and is detachably accommodated in the plastics material injection moulding machine in position-determining moulded members (mating bore 44; 44d, threaded bore 44a, bearing bracket 44b) of the carrier.

2. Injection moulding machine according to claim 1, characterised in that a linear potentiometer (133) is provided as a displacement measuring device, which forms a structural unit with the spindle drive, the housing of said potentiometer being mounted on the rotary spindle bearing (124), and the slide contact holder of said potentiometer being detachably connected to the carrier (frame 117) of the injecting unit (S).

3. Injection moulding machine according to claim 1 or 2, characterised in that the motor (122), which is mounted on the outer wall of the rotary spindle bearing (124) and is at right angles to the axis of the drive screw (120), forms a unit, disposed outside the vertical projection of the machine bed (12), with a step-down transmission (122a), which is in the form of a worm gear.

4. Injection moulding machine according to claim 3, characterised in that the carrier, which is displaceable on horizontal guide columns (42) supported on parallel longitudinal walls (12b, 12c) of the machine bed, is formed by a rectangular frame (117), the mating bore for the ball roller nut (121) of the spindle drive, which is in the form of a ball roller spindle drive, being formed in the longitudinal sides (117e) of said frame facing the rotary spindle bearing (124), in that a bearing bracket (44b), which determines the position of the rotary spindle bearing (124), is mounted on a horizontally bent-in sheet metal edge of the longitudinal wall (12b) of the machine bed (12), and in that both the ball roller nut (121) and a locating element (133a) of the linear potentiometer (133) are insertable into the mating bore (44, 44d) in a longitudinal side (117e; 117f) of the frame (117) as a consequence of an axial mounting movement into a final mounting position at right angles to the injection axis (s-s, w-w), an aperture (44c) in the longitudinal side (117e), accommodating the ball roller nut (121), being traversable by a portion of the linear potentiometer housing, and the rotary spindle bearing (124) being connectable to the bearing bracket.

5. Injection moulding machine according to claim 4, characterised in that the frame (117) is provided with moulded-on guide ribs, having horizontal supporting surfaces (147) for supporting rollers (16 in Figs. 1, 8) of the injecting unit (S), and with vertical guiding surfaces (147a) for guide pins (148) and is clampable to the guide columns (42) by means of moulded-on, radially split clamping sleeves (117c) and by means of clamp screws (125) which traverse the gaps (117d in Fig. 8).

6. Injection moulding machine according to one of the preceding claims, characterised in that one of the operating positions (non-injecting position) of the injecting unit (S) is determined by an injection axis (z-z), which intersects a cooling plate (30 in Figs. 4, 11) detachably connected to the stationary mould support (15), the selectable injection axes (w-w) for a non-symmetrical sprue lying on one side of the central injection axis (s-s), and the injection axis (z-z) of the non-injecting position lying on the other side of the central injection axis (s-s) in the horizontal transfer plane (h-h), respectively.

7. Injection moulding machine according to one of the preceding claims, characterised in that the injecting unit (S) is movable to the respective injection mould (G; G') by means of hydraulic actuating cylinders (18), the piston rods (14) of such cylinders extending to the stationary mould support (15), being axially securable in groove-like guide members (15a) of this mould support (15), being supportable on the frame (117) by means of a cast iron supporting member (19) and being horizontally displaceable with said frame.

8. Injection moulding machine according to one of claims 5 to 7, characterised in that, to prevent displacement, the injecting unit is securable on the frame (117) by means of a locking bar (149) and a screw (149a) with the release of the supporting rollers (16) and the guide pins (148).

9. Injection moulding machine according to one of the preceding claims, characterised in that at least one of the guide columns (42) is provided with a measuring scale (17a), and the edge of the frame (117) facing the operating location of the injection moulding machine is slidable over the measuring scale (17a), as a reading edge, for the manual adjustment of the desired operating position of the injecting unit (S).

10. Injection moulding machine according to one of the preceding claims, characterised in that, instead of the provision of the control device (M), a measuring device may be selectively provided for the reproducible setting of the desired operating position of the injecting unit (S), said measuring device including a measuring rod (17) and a sleeve (17c), which surrounds this measuring rod (17), the front edge of said sleeve being slidable over the measuring scale (17a) as a measuring edge, the measuring rod (17) being mountable on the bearing bracket (44b), and the sleeve being mountable in the mating bore (44).

## Revendications

1. Machine de moulage de matière plastique par injection, dans laquelle on peut charger au choix un moule de moulage par injection (premier moule de moulage par injection G) dont l'orifice d'alimentation (11) est central ou d'autres moules de moulage par injection (G') dont l'orifice d'alimentation (11a) est excentré et qui sont destinés à une alimentation asymétrique, comprenant une unité horizontale de fermeture des moules (F) disposée sur un socle (12) de la machine, ainsi qu'une unité de moulage par injection (S) qui est disposée sur un support en fonte monté coulissant sur des guidages horizontaux, et qui peut être fixée au choix, à partir d'une première position de travail dans laquelle elle peut être amenée contre l'orifice d'alimentation central (11) du premier moule de moulage par injection (G), l'axe d'injection (s-s) étant central, au moyen d'un mécanisme à broche qui s'appuie sur le socle (12) de la machine et qui est en prise avec le support de l'unité de moulage par injection (S), et dans un plan de transfert (h-h) passant par l'axe d'injection central (s-s), dans d'autres positions de travail déterminées par des axes d'injection excentrés (w-w), pour être amenée dans celles-ci contre l'orifice d'alimentation excentré (11a) des autres moules de moulage par injection (G') en passant par une ouverture de passage (15d) qui est élargie, du moins dans la direction du plan de transfert (h-h), caractérisée par le fait qu'un dispositif de commande (M) du support (cadre 117) de l'unité de moulage par injection, lequel est constitué par un dispositif de mesure des trajets (potentiomètre linéaire 133) et par le mécanisme à broche, en pouvant être actionné selon un programme, est logé d'une manière amovible dans la machine de moulage de matière plastique par injection, et ce, dans des évidements (perçage ajusté 44, 44d, perçage fileté 44a, socle de palier 44b) du support qui déterminent sa position.

2. Machine de moulage par injection selon la revendication 1, caractérisée par le fait qu'il est prévu comme dispositif de mesure des trajets un potentiomètre linéaire (133) qui constitue par construction un module avec le mécanisme à broche, dont le boîtier est fixé sur le palier de rotation (124) de la broche et dont le support de contact glissant est relié d'une manière amovible au support (cadre 117) de l'unité de moulage par injection (S).

3. Machine de moulage par injection selon la revendication 1 ou 2, caractérisée par le fait que le moteur (122) qui est fixé à la paroi extérieure du palier de rotation (124) de la broche et qui est disposé perpendiculairement à l'axe de la broche filetée (120) constitue, avec un réducteur (122a) réalisé sous la forme d'un engrenage à vis sans fin, un ensemble qui est situé, en projection horizontale, à l'extérieur de la surface du socle (12) de la machine.

4. Machine de moulage par injection selon la revendication 3, caractérisée par le fait que le support, lequel peut coulisser sur des colonnes de guidage horizontales (42) appuyées sur des parois longitudinales parallèles (12b, 12c) du socle de la machine, est constitué par un cadre rectangulaire (117), cependant que, dans son aile longitudinale (117e) qui est tournée vers le palier de rotation (124) de la broche, est formé le perçage ajusté destiné à l'écrou à billes (121) du mécanisme à broche qui est réalisé sous la forme d'un mécanisme à broche à écrou à billes, par le fait qu'un socle de palier (44b) qui détermine la position du palier de rotation (124) de la broche est fixé sur un bord en tôle replié à l'horizontale de la paroi longitudinale (12b) du socle (12) de la machine, et par le fait que tant l'écrou à billes (121) qu'un élément de positionnement (133a) du potentiomètre linéaire (133) peuvent être introduits, dans une position finale de montage, dans le perçage ajusté (44, 44d) d'une aile longitudinale (117e, 117f) du cadre (117), et ce, à la suite d'un déplacement axial de montage qui est dirigé transversalement par rapport à l'axe d'injection (s-s, w-w), cependant qu'un évidement (44c) de l'aile longitudinale (117e) qui reçoit l'écrou à billes (121) peut être traverse par une partie du boîtier du potentiomètre linéaire, et que le palier de rotation (124) de la broche peut être relié au socle de palier.

5. Machine de moulage par injection selon la revendication 4, caractérisée par le fait que le cadre (117) est muni de nervures de guidage qui sont formées sur lui et qui comportent des surfaces d'appui horizontales (147) destinées à des galets d'appui (16 sur les figures 1 et 8) de l'unité de moulage par injection (S), ainsi que de surfaces de guidage verticales (147a) destinées à des tiges de guidage (148), et qu'il peut être bloqué sur les colonnes de guidage (42) au moyen de manchons de serrage (117c) qui sont formés sur lui et qui sont fendus dans le sens radial, et au moyen de boulons de serrage (125) qui traversent les fentes (117d sur la figure 8).

6. Machine de moulage par injection selon l'une des revendications précédentes, caractérisée par le fait que l'une des positions de travail (position d'injection à vide) de l'unité de moulage par injection (S) est déterminée par un axe d'injection (z-z) qui rencontre une plaque de refroidissement (30 sur les figures 4 et 11) reliée d'une manière amovible au porte-moule fixe (15), cependant que les axes d'injection (w-w) que l'on peut choisir à volonté pour une alimentation asymétrique sont situés d'un côté de l'axe d'injection central (s-s), et que l'axe d'injection (z-z) de la position d'injection à vide est situé de l'autre côté de l'axe d'injection central (s-s), et ce, pour chacun d'eux, dans le plan de transfert horizontal (h-h).

7. Machine de moulage par injection selon l'une des revendications précédentes, caractérisée par le fait que l'unité de moulage par injection (S) peut être amenée contre le moule de moulage par injection correspondant (G ; G') au moyen de vérins hydrauliques (18) dont les tiges de piston (14) s'étendent jusqu'au porte-moule fixe (15) en pouvant être fixées axialement dans des guidages en forme de rainures (15a) de ce porte-moule (15), en pouvant s'appuyer sur le cadre (117) au moyen d'une pièce d'appui en fonte (19) et en pouvant être déplacées horizontalement avec celle-ci.

8. Machine de moulage par injection selon l'une des revendications 5 à 7, caractérisée par le fait qu'en vue du blocage pendant le transport, l'unité de moulage par injection peut être fixée sur le cadre (117) au moyen d'une baguette de blocage (149) et d'un goujon fileté (149a), les galets d'appui (16) et les tiges de guidage (148) étant soulagés de leurs charges.

9. Machine de moulage par injection selon l'une des revendications précédentes, caractérisée par le fait que l'une au moins des colonnes de guidage (42) est munie d'une graduation (17a), et que le bord du cadre (117) qui est tourné vers le poste de manoeuvre de l'unité de moulage par injection (S) peut glisser sur la graduation (17a) pour servir de bord de lecture en vue du réglage manuel de la position de travail souhaitée pour l'unité de moulage par injection (S).

10. Machine de moulage par injection selon l'une des revendications précédentes, caractérisée par le fait qu'à la place de l'unité de commande (M), il est prévu au choix un dispositif de mesure qui est destiné au réglage reproductible de la position de travail souhaitée pour l'unité de moulage par injection (S) et qui comporte une tige de mesure (17), ainsi qu'un manchon (17c) entourant cette tige de mesure (17), cependant que le bord frontal de celui-ci peut glisser sur la graduation (17a) pour servir de bord de mesure, que la tige de mesure (17) peut être fixée sur le socle de palier (44b) et que le manchon peut être fixé dans le perçage ajusté (44).
